Europäisches Patentamt

European Patent Office

Office européen des brevets

(19)

(11) EP 0 773 432 A2

(12) **EUROPEAN PATENT APPLICATION**

(43) Date of publication:
14.05.1997 Bulletin 1997/20

(51) Int Cl.6: **G01F 1/708**, G01F 1/712

(21) Application number: 96308033.8

(22) Date of filing: 06.11.1996

(84) Designated Contracting States:
DE GB

(30) Priority: 15.12.1995 US 572960
13.11.1995 US 6542

(71) Applicant: THE BOC GROUP, INC.
Murray Hill, New Providence,
New Jersey 07974 (US)

(72) Inventors:
• Wadlow, David
Basking Ridge, New Jersey 07920 (US)

• Scott, Ian
Belle Meade, New Jersey 08502 (US)
• Draganovic, Krunoslav E.
Upper Nyack, New York 10960 (US)

(74) Representative: Gough, Peter et al
c/o THE BOC GROUP PLC
Patent Department
Chertsey Road
Windlesham Surrey GU20 6HJ (GB)

(54) **Flowmeter and method of using the same**

(57) Flowmeter for the measurement of a flow characteristic of a fluid using a signal generator and at least one signal sensor for sensing a signal as it is carried in the flow direction of the fluid in which signal generation and processing are operated to provide accurate and rapid flow measurements over a wide dynamic flow range for diverse fluid compositions.

FIG. I

**Description**

The present invention is generally directed to a flowmeter for the measurement of a flow characteristic of a fluid using a signal generator and at least one signal sensor for generating and sensing a signal as it is carried by the fluid in the direction of flow.

Time-of-Flight (TOF) measurement is a flow sensing technique in which the flow of a fluid such as a gas or liquid is measured by timing the passage of a generated signal, such as a thermal pulse, as it is carried between two points over a known distance in the direction of the fluid flow. The signal is convected by the flow of the fluid and the time it takes to pass between the two points is a measure of a flow characteristic of the fluid. The time of transit or flight of the signal is an indication of the mean velocity between the two measurement points which allows the volumetric flowrate of the fluid as well as other flow characteristics to be determined.

The signal that may be used can be generated from a number of sources including heaters, acoustic generators, optical generators and the like. What is required is that the signal be conveyed downstream by the fluid flow so that it can be detected by a sensing device.

Thermal time-of-flight flowmeters have been known since 1948. L.S.G. Kovasznay, "Hotwire Investigation of the Wake Behind Cylinders at Low Reynolds Numbers", Proceeding Royal Society vol. 198:174-190 (1948) provides a time-of-flight flow measurement for the flow of gas in a wind tunnel. A stationary heater is positioned normal to the mean flow upstream of a movable sensor. The spatial wavelength of the convected heat pattern is measured by moving a hot wire anemometer in the flow while knowing the heater driving frequency and comparing the sensor signal to the same. From this, the mean convection velocity may be calculated.

Andrew B. Bauer, "Direct Measurement of Velocity by Hot-wire Anemometry, AIAA Journal, 3(6):1189-1191 (June 1965) describes a heater-sensor probe arrangement for taking gas velocity measurements. The device is intended for very high velocity flow measurements under turbulent conditions. The heater and sensor comprise short lengths of very fine wires made of platinum and rhodium which are parallel to one another and normal to the direction of flow of the fluid.

L.J.S. Bradbury et al., "A pulsed-wire Technique for Velocity Measurements in Highly Turbulent Flows", Journal of Fluid Mechanics vol. 49 (part 4) pp. 657-691 (1971) discloses a probe in which the sensor was positioned at right angles to the heater. The authors discuss the effects of thermal diffusion and errors that may arise as a result, particularly at low flow rates and sensor signal pattern stability which is responsible for errors at high flow rates.

Unlike a velocity probe, a volumetric flow device measures the flow of a fluid passing through a conduit as described in C.A. Mosse "The Design and Evaluation of Devices for Measuring Breathing Tidal and Minute Volumes, Masters Thesis Cranfield Institute of Tech. (Sept. 1980). Mosse employs principals utilised with velocity probes for the problem of volumetric flowrate. The volumetric flow sensor described by Mosse was potentially suitable for neonatal volumetric flowrate monitoring. To counteract some of the noise that interfered with the heater-sensor arrangement, Mosse added an extra sensor wire at the sensor axial location but displaced from the first sensor wire. The dual sensor system was merely used to collect noise signals from the flow and did not intercept the thermal pulse for the purpose of generating a timing signal.

C.A. Mosse et al., "Microprocessor-based Time-of-Flight Respirometer", Med. Biol. Eng. Comp., Vol. 25: 34-40 (1987) incorporated a microprocessor in the processing electronics for real time operation of a transducer using a single heater and two sensor wires. The heater-sensor pair were parallel to each other and on the transducer axis and hence parallel to the direction of the mean fluid flow.

Goldberg, U.S. Patent No. 4,938,079 discloses a thermal transit time flow measurement system for liquids and particularly to a device for IV infusion. The device incorporates a microprocessor for controlling the heater and signal processing. The system employs at least one heater and at least one sensor with two and three sensors being specifically disclosed. The heater and the sensors are located external to the conduit. Microwave energy is used to generate the thermal pulse. The power from the heater is applied for a specified period such that the liquid flow experiences a typical temperature rise of a few degrees Centigrade. The second sensor is thermally isolated from the heater and senses the resulting thermal pulse as it is carried by the liquid. The flow measurement involves comparing the signals from the first and second sensors as a function of time. The transit time measurement is then related to the flowrate through the use of the microprocessor.

S.A. Abesekera et al. "Liquid Flow Measurement by Cross Correlation of Temperature Fluctuations", Transactions of the Institute of Measurement and Control 5 (11) pp.435-439 (Nov. 1972) discloses a cross correlation liquid flowmeter for the measurement of steady and pulsating, laminar and turbulent flows.

Flowmeters of the type discussed above suffer from a number of disadvantages. In many cases, the flowmeters are dependent on the type of fluid that passes through the conduit. For example, some flowmeters are only applicable to liquids or gases but not both. In addition, such flowmeters are limited by the composition of the gas or liquid flowing therein. As a result, the flowmeter must be recalibrated or another flowmeter employed when there is a change in the fluid composition. Another disadvantage of prior art systems concerns the accuracy of the flow measurement. Such systems are inaccurate or are accurate only within a narrow range of flow rates. Thus, some prior art systems may be employed only when the difference between the minimum and maximum flows through the conduit is within a specified narrow range.

Another disadvantage of prior art systems is that they are generally adapted to measure flowrates only for turbulent flows or laminar flows but not both. A still further disadvantage of prior art systems is that they lack the speed of response necessary for applications such as healthcare devices that require very rapid flowrate measurements such as employed for the administration of anaesthetics. Furthermore, it is typical for prior art devices to measure flow in only a single direction (i.e. unidirectional). However, some applications such as in healthcare devices, require bi-directional flow measurements (i.e. the measurement of flowrates of fluids going into and out of a patient).

A flowmeter useful in a commercial setting such as in the healthcare industry must provide information about the flow characteristics of a fluid that is reliable and timely. The performance of a flowmeter is dependent on a number of performance characteristics. Included among these are fluid composition independence (especially for gas flow measurements), speed of response, flow dynamic range, accuracy including repeatability and linearity, and minimisation of crosstalk interference. Other performance characteristics which impact on the operation of a flowmeter include ruggedness of the flowmeter, compactness, and the power required to operate the device.

As used herein the term "fluid composition independence" shall generally mean that the device can provide reliable and timely information of flow characteristics regardless of the composition of the fluid. In particular, fluid composition independence provides a flowmeter which performs in a desirable manner regardless in the change of density, thermal conductivity, viscosity and/or specific heat of the fluid which is to be measured.

The term "speed of response" shall generally mean the time it takes for the flowmeter to detect a change in flow rate.

The term "accuracy" as used herein includes two components; namely, repeatability and linearity. The term "repeatability" shall generally mean herein that the flowmeter is capable of providing the same measurement for the same flow over a set period of time. In other words, if the flowrate remains constant, the readout of the flowmeter will remain constant and not fluctuate significantly (e.g. by more than 5%).

The term "linearity" is a comparison between the mean flowrate at a given point in time and the actual flowrate. A plot of the mean flowrate versus the actual flowrate for a high performance flowmeter as described herein should result in essentially a straight line response.

The term "flow dynamic range" generally means the range of flowrates that can be measured by the flowmeter. A "wide flow dynamic range" as used herein in association with the present invention is one in which both very low flowrates (approaching zero) and very high flow rates can be measured by the same flowmeter. More specifically, a wide dynamic flow range generally includes a flow range in which the ratio of the lowest to the highest flowrates is at least about 10:1, preferably at least about 50:1.

It would be a significant advance in the art of flow measurement to provide a flowmeter which can provide accurate and rapid flow measurements over a wide flow dynamic range for diverse fluid compositions in a cost effective and efficient manner.

According to a first aspect of the present invention, a device for measuring a flow characteristic of a gas comprises:

(a) at least one signal generating means positioned in proximity to the flowpath of the gas for generating a detectable signal and for delivering the detectable signal within the flowpath of the gas; and

(b) at least one pair of longitudinally spaced apart sensors positioned downstream of the signal generating means for sensing the detectable signal as a measure of the time of flight of the detectable signal between the pair of sensors.

The configuration of heater-sensor-sensor as employed in the present invention has intrinsic advantages related to independence of the flow measurement from gas composition variations.

In a preferred embodiment the signal generating means is adapted to generate a thermal pulse having a peak temperature in which the shape of the pulse is substantially uniform about the peak temperature. By controlling the shape of the thermal pulse as described hereinafter, errors due to variations in gas compositions are reduced or eliminated.

In a related aspect of the invention, there is provided at least one line sensor positioned off-axis of the flowpath which senses the signals along a line traversing the direction of the flow of the fluid. This aspect of the invention improves linearity and therefore accuracy and makes it possible for the present flowmeter to measure flow characteristics in both turbulent and laminar flow regimes.

In one embodiment of the present invention, there is provided a flowmeter having a heater which can generate thermal pulses at a rate where it is not necessary for the heater to cool down to the original starting temperature. This system enables the more rapid generation of thermal pulses and thereby faster response times. In a preferred aspect of the invention, the heater is a thin film conductor comprising a solid electrically non-conducting core and a thin metallic film covering at least a portion of the core. Similarly constructed sensors can also be employed.

In a still further embodiment, the signal which is generated from the signal generating means comprises the simultaneous combination of at least one higher frequency component and at least one lower frequency component. The employment of multiple frequencies provides a flowmeter capable of measuring fluids in a wide flow dynamic range (i.e. very low flowrates to very high flowrates) without time consuming calibrations or the use of multiple flowmeters.

There is also provided in accordance with the present invention a system for processing simultaneous multiple frequency signals to determine the time delay difference between two instances of the signal both accurately and unambiguously over a wide range related to the periods of the frequency components. This system eliminates or at least reduces phase ambiguity errors particularly at low flowrates.

In yet a further embodiment of the present invention the heater generates alternating power pulses, preferably such pulses having alternate polarities. The generation of detectable signals in this manner shifts the electrical power spectral power to half the thermal pulse signal frequency and thereby serves to eliminate crosstalk interference when the signal is processed.

Related to this aspect of the invention, the crosstalk interference signal can be used to eliminate phase delay errors due to normal differences due to manufacturing tolerances in the signal processing components of each channel of the signal processing system. In particular, the signal generation means generates not only a signal to be detected but also inherently generates a crosstalk interference signal. Means of sensing the crosstalk interference signal and for employing the crosstalk interference signal to eliminate any phase delay errors of this type in the detectable signal is also provided.

The flowmeter of the present invention can also employ systems for controlling the temperature of the heaters so as to (a) ensure that they do not exceed a predetermined maximum temperature and/or (b) are operated within a selected range of temperatures. Such systems are desirable for flowmeters which operate under a wide flow dynamic range such as in the healthcare industry in devices for measuring the inflow and outflow of gases by a patient.

The accuracy of the present flowmeter can be enhanced by having a multiplanar arrangement for the signal generating and signal sensing devices. In particular, the flowmeter of the present invention can include a plurality of signal generating and sensing units wherein each unit comprises at least one signal generator and at least one signal sensor. Each of the units is positioned in a plane along the mean flow direction of the fluid. The planes are parallel to each other so that the units are spaced apart and parallel to each other in the mean flow direction of the fluid. In addition, the signal generator and sensing devices of one unit are in the same longitudinal position of another unit.

In a still further aspect of the present invention, the flowmeter can detect a flow characteristic of the fluid regardless of the direction that the fluid is flowing. For example, if the flowmeter is positioned within a conduit such as associated with an intubation tube, the flow direction of the fluid can be going into the patient or in the opposite direction, going out of the patient. In one aspect of the present invention, the flowrate of the fluid can be measured in either direction. This is accomplished by providing first and second signal generating means for generating a detectable signal within the fluid flow so that the same can be detected downstream by the sensors.

In another aspect of the invention, there is provided a method of determining the time delay difference between two instances of the same signal unambiguously, said signal containing at least two known frequency components. The method comprises cross correlating the signal over a correlation interval substantially equal to the period of the lowest frequency component and locating the peak of the cross correlation function to thereby obtain the time delay. This aspect of the invention is an efficient cross correlation technique for determining the thermal signal transit time unambiguously where the signal comprises a range of known simultaneous frequencies in order to achieve wide dynamic range performance. The efficiency of the technique is such that it is helpful for smooth operation in an automatic real time device.

The multiple aspects of the present invention enhance one or more of the components of performance to obtain a flowmeter device which can be independent of fluid composition, provide for rapid speed of response over a wide flow dynamic range. In addition, the accuracy of the measurement including repeatability and linearity are improved over systems known in the art.

Embodiments of the invention will now be described, by way of example, reference being made to the Figures of the accompanying diagrammatic drawings in which:-

Figure 1 is a schematic view of an embodiment of the flowmeter system of the present invention;

Figure 2 is a cross-sectional view of an embodiment of a transducer which can be used in the flowmeter system of the present invention showing the relative position of the heaters and sensors;

Figure 3 is a front view of the transducer shown in Figure 2;

Figure 4 is a rear view of the transducer shown in Figure 2;

Figure 5 is a cross-sectional view of a thin film conductor which may be employed as a heater or sensor in the present invention;

Figure 6 is a schematic view of one embodiment of the invention for generating a thermal pulse comprising a frequency modulated and/or amplitude modulated waveform component;

Figure 7 is a graph showing a signal spectrum generated through the use of a frequency modulated heater voltage waveform;

Figure 8 is a schematic view of one embodiment of the signal processing system of the present invention;

Figure 9A is a flow chart showing the flow of digital data involved in the processing of a detectable signal from the sensor to a readout of information regarding the flow characteristics of a fluid;

Figure 9B is a graph showing a cross correlation function of a signal containing two different frequencies and a delayed version of that signal where the delay is greater than the period of the high frequency component;

Figure 10 is a flow chart showing the processing of the high and low signal strength measurements as shown in Figure 9A to determine flow direction, instrument flow zero and the like;

Figure 11 is a schematic view of a signal processing system using zero crossing timers;

Figure 12 is a flowchart showing a master algorithm for processing the signal in the embodiment of Figure 9A;

Figure 13 is a schematic view of a still further embodiment of the invention including two systems for controlling the temperature of the heater;

Figure 14 is a schematic view of a divider circuit used in the embodiment of Figure 13;

Figure 15 is a graph showing the inputs and outputs associated with the timed divider voltage sampling of Figure 13;

Figure 16 is a flow chart of an algorithm for operation of the temperature heater control systems shown in Figure 13 as well as optional amplitude modulation generation;

Figure 17 is a schematic view of an embodiment of the invention using a biplanar arrangement of heaters and sensors; and

Figure 18 is a schematic view of a further embodiment of the signal processing system of the present invention particularly adapted for a biplanar arrangement of heaters and sensors.

The present invention is directed to a flowmeter system in which the flow of a fluid, whether gas or liquid, can be measured to obtain desired flow characteristics including volumetric flowrate, or velocity. As a consequence of the present invention, measurements of these flow characteristics are obtained with improved performance over flowmeters known in the art. In particular, the present invention provides a flowmeter system which can measure fluids regardless of composition over a wide flow dynamic range with exceptional speed of response and accuracy as defined herein.

In general, the flowmeter system provides for the generation of a signal, which can be created, for example, by varying the temperature of a heater proximate to the fluid and then relating the temperature variation of the fluid into a measurement of a flow characteristic of a fluid, such as can be performed with a heater-sensor system. The flowmeter system preferably includes a combination of a signal generator and a signal sensor, preferably a pair of downstream sensors for sensing the generated signal downstream of the fluid flow. A frequency encoding system is provided to generate detectable signals under controlled conditions which can be readily sensed by the signal sensors. There is also provided a signal processing system by which the signals sensed by the sensors are processed to obtain a flow characteristic of the fluid.

The present flowmeter can sense any type of fluid including gases and liquids. While liquids can be sensed in accordance with the present invention, a description of the present system will be made with reference to gases only. It should be understood however that the system, unless otherwise specified, can be applied to liquids as well.

The signal generating means employed in the present invention can include devices for generating a wide range of signals including thermal pulses, acoustical signals, and the like. All that is required is that the signal generating means generate a signal which can be carried with the fluid downstream to a sensor. The signal sensing means can be any device which can sense or detect the signal generated by the signal sensing means which has been carried in the flow direction of the fluid.

It will be understood that a variety of different signal sources can be used. By way of example and for convenience only, the detailed description of the invention will refer to a preferred form of the invention including a signal sensing means (a heater) which is capable of generating a detectable signal (a thermal pulse) which is sensed by a sensing means (thermal sensor) capable of sensing the signal and sending it to the signal processing system.

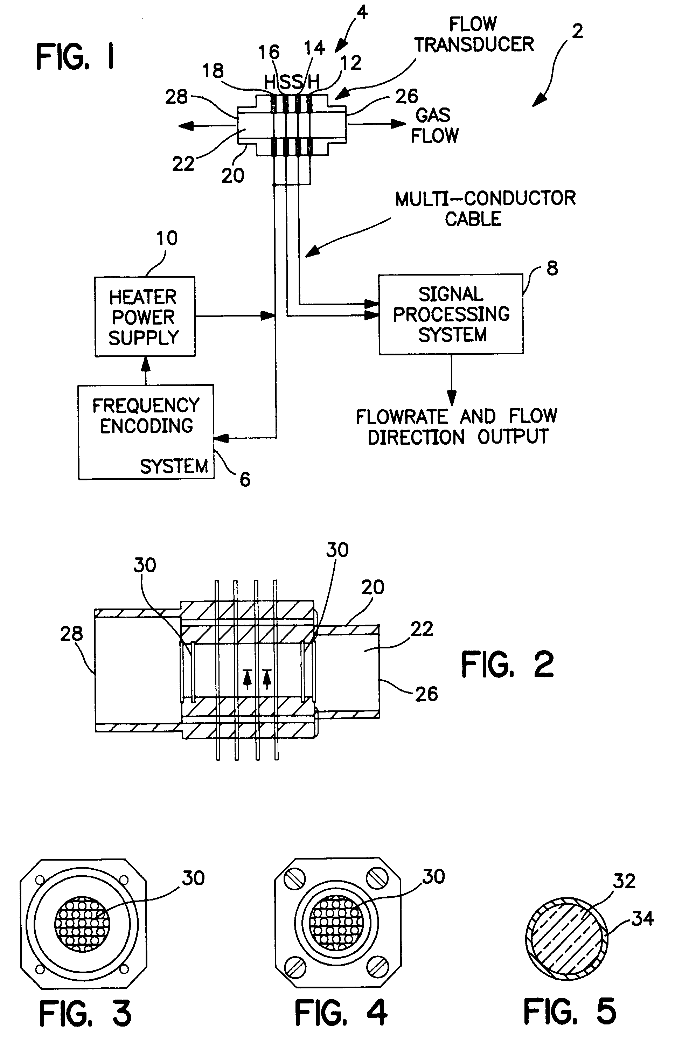

Referring to the drawings and particularly to Figure 1, the flowmeter system 2 of the present invention generally includes a flow transducer 4, a frequency encoding system 6 and a signal processing system 8. A power supply 10 is shown specifically for a heater and is used to provide the necessary energy on instructions from the frequency encoding system 6 to the flow transducer 4 to produce a detectable signal (e.g. a thermal pulse) which is convected in the direction of the flow of the fluid (e.g. gas). In accordance with the present invention, a thermal pulse is generated and supplied to the transducer 4 so that it may be carried in the direction of flow of the fluid.

The flow transducer 4 includes a heater 12 and at least one sensor, preferably at least one pair of downstream sensors 14, 16. As shown in Figure 1, the heater 12 is positioned within the flowpath. It should be noted, however, that the heater may be positioned outside of the flowpath so long as the heater 12 generates a thermal signal or pulse which is carried downstream in the direction of the fluid flow and is sensed in order by the downstream sensors 14, 16. In a preferred aspect of the present invention, the transit time or time of flight of the thermal pulse between the sensor 14 and the sensor 16 is used as an indication of a flow characteristic of the fluid.

In accordance with a principle aspect of the present invention, the frequency encoding system 6 is operatively connected to the heater power supply 10 to power the generation of thermal pulses which can be sensed and processed. In accordance with embodiments of the invention discussed hereinafter, the effects of thermal diffusion are minimised and the performance characteristics of the flowmeter are enhanced. The signals sensed by the sensors 14, 16 are processed in the signal processing system 8 in a manner which provides translation into a desirable flow characteristic consistent with the high performance goals described herein.

The construction of a typical flow transducer employed in the present invention can be seen with reference to Figures 1-4. The flow transducer 4 includes a housing 20 defining a flowpath 22 which is traversed by the heater 12 and an optional heater 18 for bi-directional flows as discussed hereinafter and first and second sensors 14 and 16. The heater and sensors are suspended within the flowpath in desirable locations by securing the ends thereof to the housing through the use of a mechanically secure, electrically conductive connection, such as a conductive cement. Means of suspending the heater and sensors within the flowpath is within the knowledge of those skilled in the art.

The housing of the flow transducer 4 includes an inlet 26 and an outlet 28. It will be understood that for bi-directional flows, the inlet 26 can, when the direction of flow is changed, become the outlet. At the inlet or at both ends of a bi-directional transducer there is preferably provided devices which serve to condition the flow of the fluid as it comes into contact with the heater 12 and the sensors 14, 16.

Flow conditioning may be obtained by a variety of flow conditioning devices. Such devices can include tube bundles and fins. As specifically shown in Figures 3 and 4, a mesh 30 made of, for example, metal or plastic is provided to condition the flow of the fluid into and out of the transducer 4. Flow conditioning is made necessary by variations in the geometry of the upstream flow conduit (e.g. bends and elbows) which gives rise to distorted flow profiles. Where bends or elbows are placed in the path of the fluid flow, there often results a distorted flow profile which in turn results in an unconditioned or poorly conditioned flow.

It is desirable to condition the flow of the fluid such as by the mesh 30 to avoid errors associated with distorted profiles. Particularly in healthcare applications for monitoring patient respiratory flows proximally, velocity profile distortion will typically be a problem because of the proximity of customary clinical airway fittings such as an elbow and a Y-fitting.

The mesh 30, preferably positioned substantially perpendicular to the longitudinal axis of the conduit, significantly enhances the accuracy of flow measurements under disturbed flow conditions by conditioning the flow prior to the generation of the thermal pulse by the heater 12. An additional advantage of the mesh 30 is that it provides protection for the heaters and sensors contained within the transducer from accidental contact by the user.

The heater 12 and sensors 14 and 16 employed in the present invention may be any thin element capable of radiating thermal energy such as solid wires made from metals such as, for example, platinum or nickel. In a preferred form of the invention, the heaters and/or sensors are thin film conductors of the type shown in Figure 5.

Referring to Figure 5, a film conductor 32 preferred for use in the present invention comprises a solid electrically non-conducting core 34 and a thin metallic film 36 covering at least a portion of the core. A most preferred construction of the thin film conductor 32 is an optical fibre coated with a thin film of platinum metal. The non-conducting optical fibre core 34 preferably has a diameter in the range of from about 10 to 40$\mu$m. The thin metallic film can be applied by vacuum sputtering or similar techniques that are capable of providing thin metallic films, preferably on the order of from about 500 to 1000Å.

It is preferred that the electrical resistance of the thin film conductor be in the range of from about 25 to 50 ohms/mm. The temperature coefficient of resistance (TCR) is a function of the property of the material and the thickness of the film. It is preferred that the TCR be as high as possible, most preferably at least .001 ohms/ohm°C.

The thin film conductors 32 preferably have a uniform coating along the entire length of the thin film conductor and a uniform diameter. This construction allows thermal pulse generation and sensing performance to be uniform along the length of the film conductor. It is highly desirable that the individual film conductors employed in the flowmeter system of the present invention have essentially the same or very similar configuration.

This ensures that heater peak temperatures are similar, and that sensor thermal responses are the same to preserve linearity performance and ensure reliability of the system for determining the flow direction.

The signal encoding system 6 as shown in Figure 1 enables the heater 12 to generate thermal pulses which are carried in the direction of the flow of the fluid so that they may be sensed by the sensors 14 and 16. The shape of the thermal pulse has a significant impact on the performance of the time of flight measurement, particularly with respect to gas composition independence.

In accordance with the present invention, the heater can be completely cooled down prior to the generation of the next thermal pulse. Alternatively, particularly when the generation of the thermal pulse is through the use of a high frequency (e.g. 510 Hz), the heater need not cool down to its original starting temperature (e.g. ambient) prior to the generation of the next thermal pulse.

What is preferred in accordance with the present invention is that the shape of the thermal pulse be substantially uniform about the peak temperature thereof. As used herein the definition of term "substantially uniform" depends on whether or not the heater completely cools down. If it does the term "substantially uniform" shall generally mean that the ratio of the response time of the heater to reach the peak temperature to the time it takes the heater to cool down is from about 1:10 to 10:1. The term "substantially uniform" when the heater does not completely cool down as it pertains to high frequency signals shall generally mean that the time it takes for the heater to reach the peak temperature is from about 20 to 60% of the time between peak temperatures of successive thermal pulses.

Efforts at measuring the time of flight of a thermal pulse are affected by thermal diffusion. The term "thermal diffusion" is the process by which a temperature distribution in a fluid undergoes changes in terms of magnitude and shape of the temperature distribution over a fixed period of time. Thermal diffusion effects are described by the diffusion equation which may be expressed in two spatial dimensions as indicated in Equations (1) and (2) below.

$$\frac{\partial \theta}{\partial t} = \kappa \cdot \left(\frac{\partial^2 \theta}{\partial x^2} + \frac{\partial^2 \theta}{\partial y^2}\right) \qquad (1)$$

where:

$$\kappa = \frac{k}{C_p \cdot \rho} \qquad (2)$$

$\theta$ is the temperature difference distribution; t is time; x, y are spatial co-ordinates; $\kappa$ is the thermal diffusion coefficient of the gas or liquid etc., commonly referred to as thermal diffusivity; $k$ is the thermal conductivity; $C_p$ is the specific heat at constant pressure; and $\rho$ is the density.

Inspection of the diffusion equation reveals a fundamental trend which is that the time rate of change of a thermal pulse is more rapid in spatial regions where the gradient of temperature change is increasing. Of particular importance is the fact that sharply varying thermal pulses, and their constituent parts, will tend to rapidly evolve into smoothly varying thermal pulses which will subsequently change shape more slowly. This means that the diffusion process not only disperses a thermal pulse but it also acts on the shape of the thermal pulse and changes it at a rate dependent on the initial shape.

In order to generate a thermal pulse, it is necessary to apply power to the heater to heat it up and then remove the power and allow it to cool down. Prior art systems have sought to achieve peak temperatures within a short time in order to provide clear definition of the thermal pulse. This tends to lend a steep and/or straight leading edge to the thermal pulse. The initial thermal pulse is thus imprinted on the flow of the fluid and during the time it takes to arrive at the first sensor becomes modified due to diffusion.

The present invention preferably generates thermal pulses in which the shape of the thermal pulse is substantially uniform about the peak temperature as previously described. The signal processing system senses the entire thermal pulse and does not have to rely on leading edge schemes as in the prior art. In the present system it is not necessary to wait for the heater to cool down between pulses, because the timing is based on the shapes of the thermal pulses at the two sensor signals, and the heater may thus be repetitively pulsed at a fixed rate of frequency. A power pulse shape is then intentionally selected in order to provide a thermal pulse shape which under steady flow conditions is sufficiently symmetrical in order that the shape changing effect due to diffusion produces negligible changes in the shape of the thermal pulse.

In accordance with a preferred aspect of the present invention, the heater 12 is pulsed in a manner such that complete cool down of the heater does not take place. In this way, the heater can be more rapidly pulsed, and the flow sensor response time can thereby be reduced over conventional systems.

The spatial relationship between the heater and the sensors and the sensing of the thermal pulse between the sensors are important considerations in minimising the effects of thermal diffusion on time of flight measurements. As previously indicated the time rate of change of a thermal distribution is more rapid where the gradient of temperature change over distance is higher. Thus, a greater change in the shape of the thermal pulse can be expected between a heater and a sensor than between the more evolved temperature distributions encountered at the spaced apart downstream sensors. It is therefore preferred to determine the time of flight measurement between the sensors rather than between the heater and the first sensor.

The position of the heater relative to the sensors must also be considered. If the heater is very close to the first sensor, the shape of the thermal pulse will undergo little change as it is carried by the fluid from the heater to the first sensor. A more dramatic change in shape of the thermal pulse may therefore occur between the sensors rather than between the heater and the first sensor. It has been determined that the distance between the heater and the first sensor is preferably at least about 1/3 the distance between the first and second sensors.

In a preferred form of the invention, the distance between the heater and the first sensor is the same as the distance between the first and second sensors.

The time of flight flowmeter measures transit time and based on a knowledge of the distance separating the sensors, the fluid velocity and not the volumetric flowrate is initially measured. The conversion of fluid velocity to volumetric flowrate can lead to errors. It is known in fluid dynamics that for any particular set of flow conditions, the velocity within a flow conduit varies according to position within the conduit. As a result, the centre position does not normally reflect the mean value or provide a straight line response. Therefore, positioning the sensors in the centre position (i.e. on or across the longitudinal axis of the flow conduit) of the conduit can lead to errors.

In addition, the flow profile of the fluid passing through a conduit is known to be a function of the flowrate and the composition of the fluid. The most dramatic variations in flow profile accompany a change from laminar flow to turbulent flow. Thus, when the flow of a fluid undergoes a change from laminar flow to turbulent flow, significant errors in the determination of volumetric flowrate can result.

In accordance with the present invention, both laminar and turbulent flows can be measured in the same flowmeter to obtain accurate volumetric flowrates. It has been determined that the employment of a line sensor to sense a detectable signal (e.g. a thermal pulse) along a line traversing the direction of flow of the fluid reduces errors due to changes in flow regimes, especially when the line sensor is off-axis (i.e. is not on or does not cross the longitudinal axis of the conduit).

An example of a line sensor and its off-axis position in the conduit is shown in Figures 3 and 4. The line sensor is capable of sensing a thermal pulse along at least a substantial length of the sensor. Line sensors are distinguished from point sensors which sense thermal pulses at a particular point in the direction of flow of the fluid. It will be noted that the sensors 14 and 16 are positioned off the longitudinal axis of the conduit (i.e. they are not on and do not cross the longitudinal axis) in a line traversing the flow direction of the fluid. The preferred off-axis location depends on the shape of the conduit. For example, for a conduit having a circular cross-section, the location of a line sensor is determined by the Equation (3)

$$r/R = 0.4 \qquad (3)$$

Wherein r is the radial distance of a line sensor from the centre of the conduit and R is the radius of the conduit.

The selection of a frequency for the generation of thermal pulses is an important criteria for achieving high performance of the flowmeter. The ability of the signal processing system to discriminate the thermal pulses in order to make a time of flight measurement, is related to the relative phase angle of the signal. For example, a time of flight of a half cycle represents a relative phase angle between the signals at the first and second sensors of 180°. This is a relatively easy measurement compared with a smaller relative phase angle such as 1°. Thus, the ability to resolve differences in the time of flight, which directly impacts on the accuracy of the measurement, is fundamentally affected by the choice of operating frequency. In a preferred form of the present invention, the signal encoding system generates a signal having the combination of simultaneous multiple frequencies including at least one higher frequency and at least one lower frequency. Higher frequencies are preferred when a faster response time is desired. Lower frequencies are preferred because they can more readily be used to measure the time of flight of thermal pulses at lower flowrates.

In accordance with the present invention, the employment of a multiple frequency signal can extend the performance level of the flowmeter as compared with a signal frequency system. The employment of a lower frequency allows the system to operate at lower flow velocities while higher frequencies achieve greater accuracy through improved repeatability as well as faster response times.

The selection of desirable higher and lower frequencies is made with regard to the range of flowrates, dimensions of the transducer, and thermal process limitations encountered in the flowmeter. By way of example and especially for gases, typical higher frequencies can be in the range of from about 200 to 700 Hz (e.g. 510 Hz) while typical lower frequencies are in the range of from about 10 to 50 Hz (e.g. 33 Hz). In the case of liquids the operating frequencies normally tend to be lower than for gases. In operation, the signal comprised of the higher and lower frequencies is employed to generate a thermal pulse. The sensing of that signal and its processing is made by selectively filtering to obtain the higher and lower frequency components. Details of the processing of the multi-frequency signal will be discussed hereinafter.

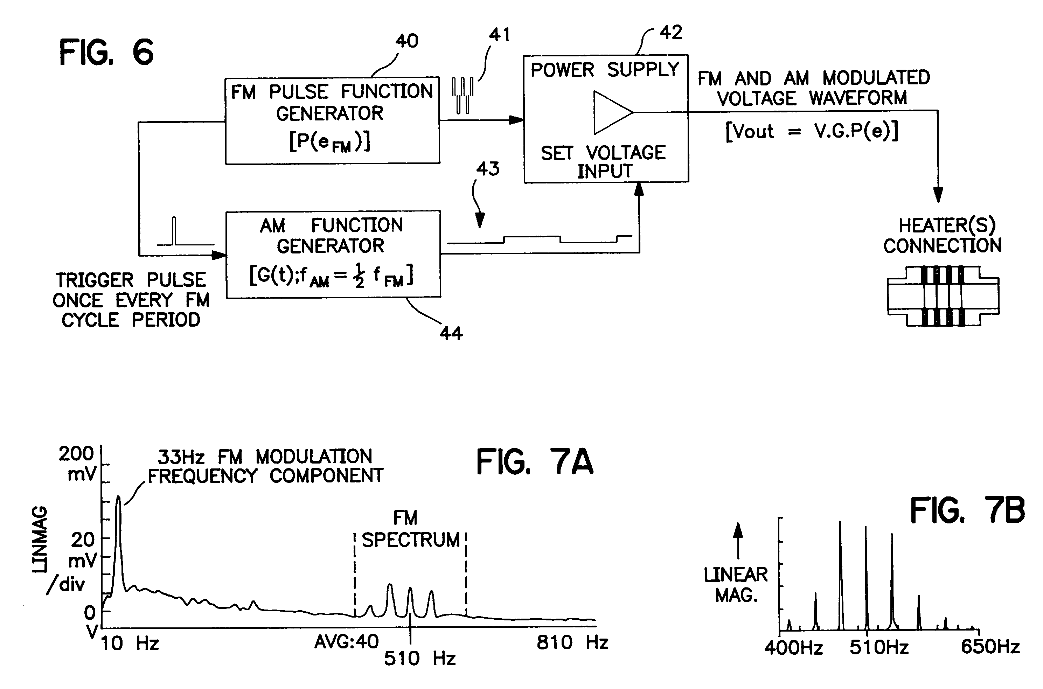

In a preferred form of the invention the thermal pulse rate is varied at a high frequency which is frequency modulated or frequency and amplitude modulated. If the heater voltage is pulsed at a rate which is frequency modulated, the power spectrum of the fluid convected thermal pulse can evidence the FM spectrum, which incorporates the carrier frequency and FM sidebands plus the lower, modulation frequency. This is because the fluid-heater combination partially demodulates the frequency modulated power wave form at the heater as a result of thermal inertia, and both frequencies are transferred to the thermal pulse and convected simultaneously. An example of such a system is shown in Figure 6.

Referring to Figure 6, there is shown an arrangement of a system by which a suitable frequency and amplitude modulated thermal pulse is generated. An FM wave form generator 40 generates a thermal pulse, preferably in the shape of a square with alternating polarity shown by numeral 41. This wave form is then continuously fed into a power supply 42 which provides the necessary voltage for the heater to provide thermal pulses at the desired frequency. At the same time or alternately, a trigger pulse is generated once every FM cycle and sent to an AM function generator 44. The resulting amplitude modulated wave form shown by numeral 43 is sent to the power supply 42. The voltage output level is varied in alternating increments once every FM cycle period e.g. 30 milliseconds is the FM frequency is 33 Hz, which thereby generates a step shaped amplitude modulation to the heater (e.g. 16.5 Hz).

An example of a signal power spectrum generated by an FM encoded heater is shown in Figure 7. Referring to Figure 7, there is shown a power spectrum of the upstream sensor signal for the gas convected thermal pulse when the centre frequency is 510 Hz modulated at 33 Hz with an index of modulation of 1.5. The gas convected thermal pulse contains the FM spectrum, which in this example includes the centre frequency and two sidebands.

It is possible to generate additional frequencies using dual tone FM modulation. This can be done with mixed modulation frequencies of, for example, 33 Hz and 10 Hz.

As discussed hereinafter, control of the peak temperature of the heater is advantageous and is achieved by controlling the voltage and hence power to the heater. Due to variations in heater cooling rates, as the gas velocity or composition varies, the peak temperature of the heater varies if the power to it is not controlled. Amplitude modulation is implemented as part of the system for controlling the peak temperature of the heater. Control of the power to the heater is therefore integrated with the frequency encoding system.

Employing an FM encoded power wave form, adjustments to the heater power cannot be made at the time of every high pulse rate frequency (e.g. 510 Hz) without impairing transfer of the modulation frequency (e.g. 33 Hz). Therefore, adjustments to the pulse voltage and hence heater power are made once every FM cycle (e.g. 30 milliseconds) as in fact indicated by the trigger pulse to the AM generator as shown in Figure 6. At that time small errors in the adjustment will generally give rise to an amplitude modulation at half the FM modulation frequency (e.g. 16.5 Hz). Therefore, the preferred heater voltage wave form is of the type wherein the AM component is at the lowest frequency such that the AM frequency is equal to one half the FM frequency. All three voltage wave forms (FM, FM + AM and AM) are all viable heater voltage wave forms for real-time operation without phase ambiguity.

The resulting AM modulation is preferably controlled by applying known alternating voltage differences at each voltage adjustment. In this way a square wave amplitude modulation is reliably generated at a known depth of modulation. In another system amplitude modulation can also be used to generate the lower frequency instead of frequency modulation and this alternative is particularly important if the fluid being measured is a liquid. In this case the liquid will carry the heat from the heaters so rapidly that FM demodulation would not occur and amplitude modulation would have to be used.

A number of viable options therefore exist for generating the lower frequency components of the simultaneous multifrequency signal. These include FM or AM, or FM and AM.

Having generated a detectable signal (e.g. a thermal pulse), preferably having multiple frequency components, a signal processing system is provided to sense the detectable signal and to provide a flowrate measurement meeting the performance criteria as described herein.

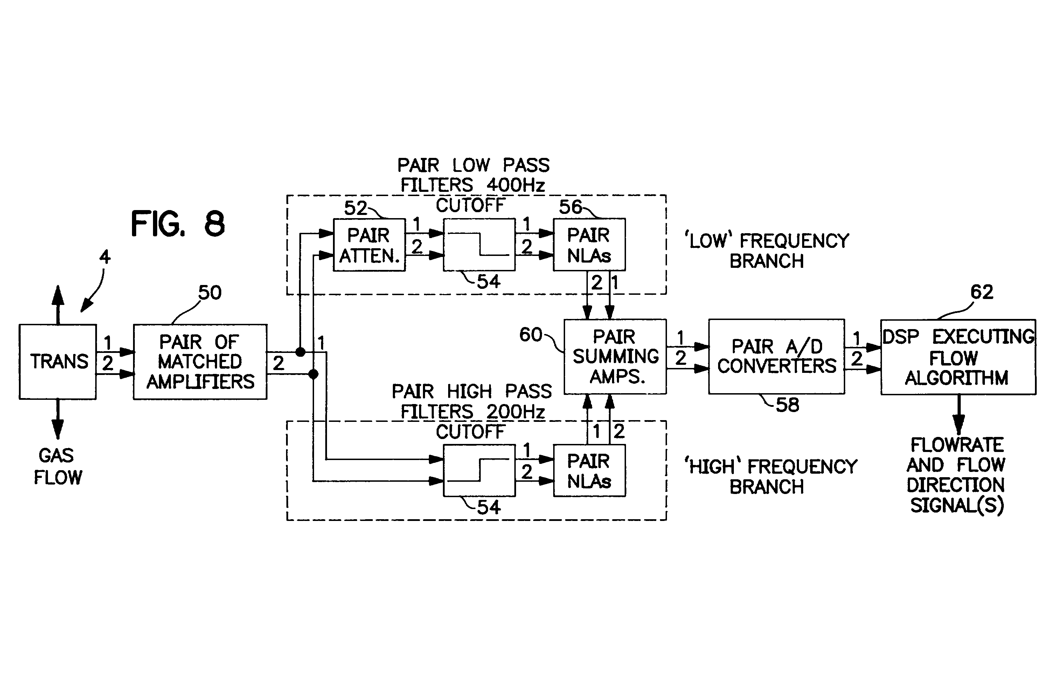

A preferred signal processing system is shown in Figure 8. A flow transducer 4 contains sensors (not shown) as previously described in connection with Figure 1. The sensors are connected via a pair of shielded leads (channels 1 and 2) to the inputs of a pair of AC coupled high gain amplifiers shown by numeral 50.

The sensors are resistive devices which change resistance approximately linearly with temperature. Therefore, the amplifier 50 is required to supply a stable DC excitation current. As previously indicated, the sensors are preferably thin film conductors having a non-conducting core and a thin film of metal as shown in Figure 5. As the resistance of the thin film conductors changes in response to the presence of a thermal pulse, a signal voltage is developed. The change in resistance with temperature is dictated by the temperature coefficient of resistance of the sensor which is equal to or related to the temperature coefficient of resistance of the sensor film material.

The excitation currents for the two sensors are preferably within 5% of each other. Within this range, the signal voltages at the two sensors, which are proportional to the thermal pulse magnitude may be reliably compared for the purpose of determining flow direction. By way of example, the preferred excitation currents using the preferred platinum thin film conductors previously described is in the region of 2 mA. The preferred excitation currents are in the range of from about 0.4 to 12 mA with a most preferred range of from about 1 to 4 mA.

After the front end amplifiers 50, the strength of the channel 1 and channel 2 signals are preferably in the range of a few tenths of a volt peak to a peak. Low frequency components tend to have a higher magnitude than the higher frequency components. In order to utilise common signal pathways, it is preferred to even out the magnitudes. The signals are coarsely partitioned into low and high ranges and sent to respective low and high frequency branches. In the preferred system, the channel 1 and channel 2 low frequency signals tend to be up to 6 times greater in magnitude than the high frequency signal and are sent to an attenuator 52 to reduce their magnitude relative to the high frequency signals by a factor of 6:1. The pairs of signals in both the low and high frequency branches are sent through respective partitioning filters 54 which are preferably digital filters such as switched capacitor devices. Cut off frequencies must be selected such that at the signal frequencies of interest, group delay differences are very small compared with the time-of-flight measurement to thereby avoid systematic timing errors.

The resulting signals are sent to respective non-linear amplifiers which amplify the signals by identical factors over most of the voltage input range to provide a range matching to the analogue to digital converters 58. Prior to entering the analogue to digital converters, the low and high frequency signals are recombined in a pair of summing amplifiers 60 and then converted into digital format via the analogue to digital converters 58 for further signal processing via the digital signal processing device 62.

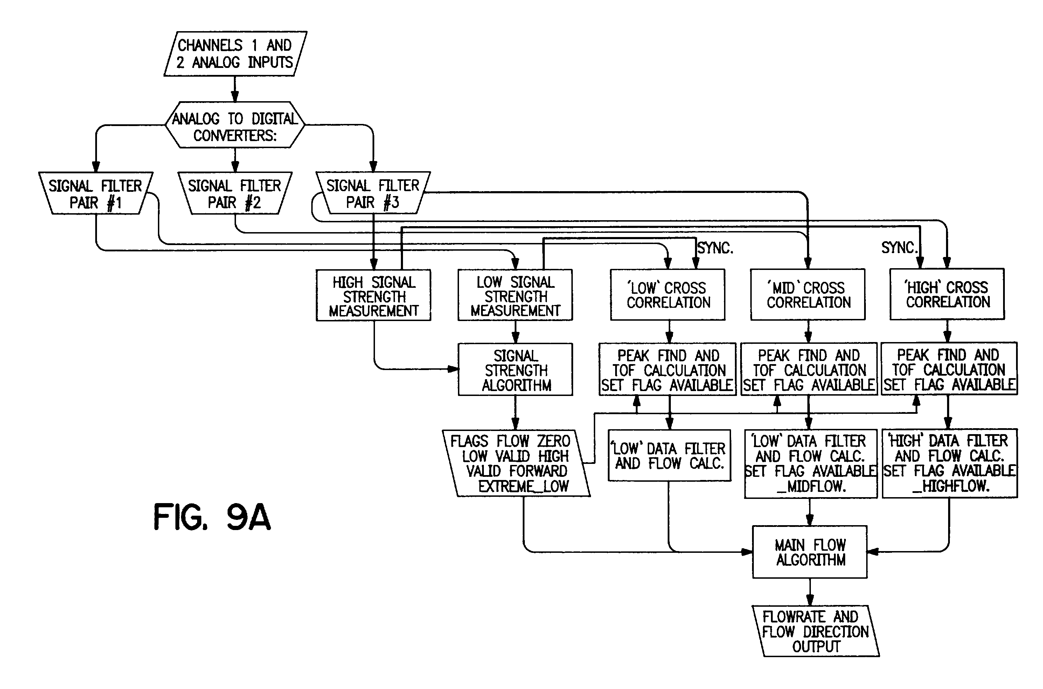

The flow of data into the digital signal processing device 62 may be at a rate up to 64 kHz but is preferably 16 kHz. When entering the signal processing device 62, the signals are first filtered to select specific spectral region pairs for subsequent cross correlation as shown specifically in Figure 9A.

Referring to Figure 9A, the channel 1 and channel 2 signals are spectrally filtered by three pairs of filters in order to select three specific signal frequency regions which span the specific frequencies generated by the frequency encoding system for cross correlation over the corresponding specific time periods. The first pair of filters are, for example, 8 pole, low pass Butterworth types with a -3 dB 70 Hz cut off frequency. The second pair of filters are, for example, 8 pole elliptical types with -3 dB points at 30 Hz and 180 Hz and a group delay which varies from about 40 ms at 33 Hz to around 12 ms at 66 Hz. The third pair of filters are 8 pole Chebyshev types with -3 dB points at 478 Hz and 550 Hz and a group delay which varies from about 10 ms at 510 Hz to about 20 ms at 477 and 543 Hz. This pass band thus encompasses the 510 Hz FM spectrum.

Group delay is a characteristic of filters and impacts important timing factors in the transit time measurement. The typical group delay and signal frequencies determines the time at which the channel 1 and 2 signals are available for subsequent analysis and time-of-flight measurement. It does not determine the minimum time-of-flight that can be measured but rather the lag time between a change in flow and a corresponding electronic measurement. This relates to the speed at which the filters can pass signals and hence the response time of the filters which is indicative of the overall response of the system to changes in flow.

It is a characteristic of the processes by which thermal pulses are impacted and then conveyed by the gas flow that lower frequencies are more effective for signal generation at lower flow velocities than higher frequencies. Hence the use of lower frequencies extends the operating range to lower flowrates where higher frequency signals tend to decay and disappear.

As shown in Figure 9A, the channel 1 and channel 2 analogue inputs are transferred to the analogue to digital converter 58 (see Figure 8) and are thereafter filtered by one of three signal filter pairs. The number 1 or low signal filter and the number 3 or high signal filter are continuously analysed to determine the peak signal strength within the signal period. Hence for low signals the peak value is determined within a given set time period (e.g. 60 ms) and the high signals the peak values are determined during a second preselected period (e. g. 1.96 ms). Truth values are then generated whereby if the signal exceeds certain preselected peak values (e. g. 20 dBV below normal operating values), they are considered to be viable and valid thermal pulse signals. Hence the outputs of these measurements consist of four flags with assigned logical truth values representing low channel 1 valid (1,0); low channel 2 valid (1,0); high channel 1 valid (1,0); and high channel 2 valid (1,0).

The three pairs of filter signal data streams feed into three simultaneous cross correlation routines called LOW, MID and HIGH. The three routines operate on synchronous data. The synchronous lines connect LOW and HIGH cross correlations with the LOW and HIGH signal strength measurements. The signal strengths are therefore synchronously measured as the cross correlations are performed. The MID routine will therefore be automatically in phase with the LOW routine. The synchronisation is in order that the LOW valid and HIGH valid flags, always correspond to the same data operated on in the current cross correlation operations.

The LOW routine cross correlates the signals from the pair of low pass filters and provides time-of-flight information designed for the low flow region of the flow dynamic range. For example, if the LOW routine operates at 2 kHz, and the analogue to digital data stream is operated at 16 kHz, the signal prefilter works on every eighth data point. The cross correlation base period in this example is 60 ms, which corresponds to the period of the lowest frequency 16.5 Hz signal component.

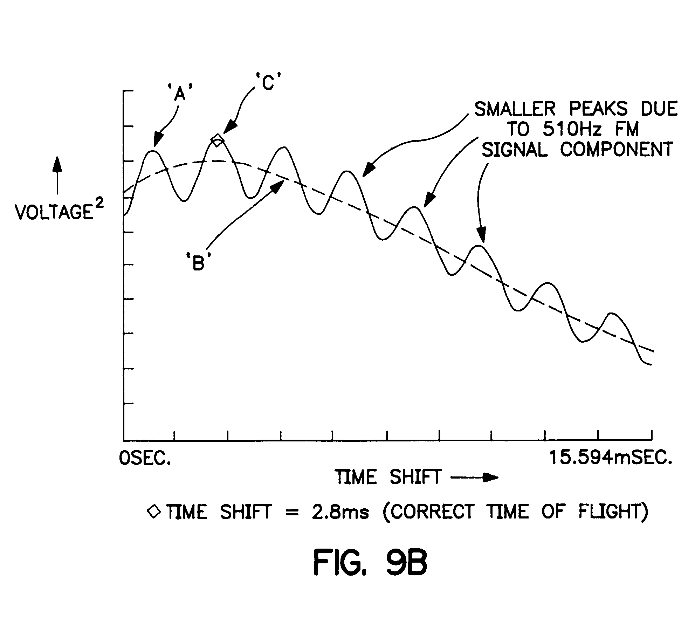

Referring to Figure 9B there is shown a graph showing a cross correlation function between two sensor signals where the signals contain the two frequencies 510 Hz and 33 Hz. The peak of the function which indicates the time delay between the signals is shown at 2.8ms. This time delay is greater than the cycle period of the higher frequency (510 Hz) component and thereby demonstrates the ability of this technique to avoid phase ambiguity.

The MID routine can operate, for example, at 4 kHz but preferably at 8 kHz. The outputs of the two pairs of filters (signal filter pair number 2 and number 3) are added together and submitted to the MID cross correlation routine which correlates the combined signals of the cycle period of the lowest frequency component (33 Hz) which is 30 ms. The HIGH routine cross correlates the signals from the pair of band pass filters number 3 and is operated at 16 kHz. The base time period is about 2 ms corresponding to the 510 Hz signal frequency.

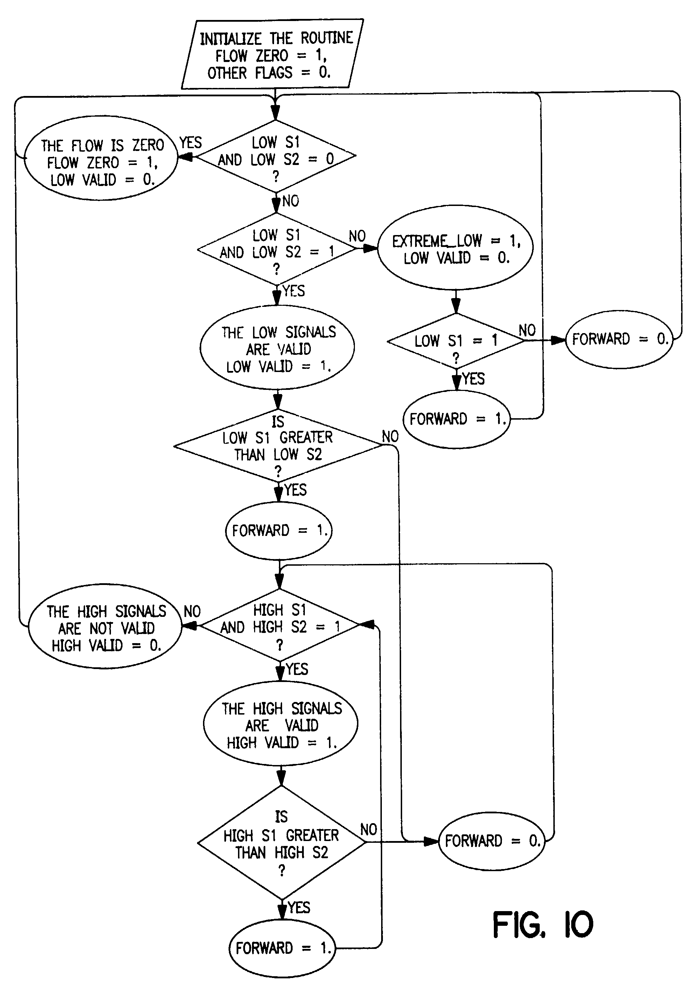

Figure 10 shows the signal strength process algorithm employed in Figure 9A for providing flow zero, flow direction, extreme low flow and signal valid outputs. As previously indicated, the outputs shown in the digital data flow of Figure 9A consist of four flags with assigned logical truth values. Figure 10 depicts the subsequent signal strength process algorithm which continually operates on these values to determine flow direction and the like.

The flow zero flag is set to 1 if the signal strength in the lowest frequency region is below a predetermined signal valid level at both sensors. When the flow zero flag is set, the system is designed to respond with a flowrate that equals zero output. Since zero cannot be measured, this means instrument zero flow to within the low flow sensitivity of the device. The low valid flag is assigned a value of 1 when the signals in both channels in the lowest frequency region are valid and signifies that low flow time-of-flight flow measurements can be reported.

The HIGH valid flag is set at 1 such that the signals in both channels in the highest frequency region are above a predetermined level and that the time-of-flight measurements based on high can be used. The forward flag is employed for bi-directional operation when two heaters are employed. This flag is set to 1 if the signal strength at sensor 1 is valid and greater than the signal strength at sensor 2. The flag is set to zero if the signal strength at sensor 2 is valid and greater than the signal strength at sensor 1. Flow direction is hence determined even at low flows when the signal strength of the downstream sensor is insufficient for an appropriate time-of-flight measurement at the designated flowrate.

An optional "extreme low" flag is set at 1 when the flowrate is so low that the downstream sensor signal strength is insufficient for a valid time-of-flight determination but the upstream sensor signal is still valid. The flowrate under these conditions is therefore between zero and the time-of-flight measurement sensitivity. An estimated value midway between these values may be selected for output and will provide better flow information than a zero output although the accuracy is reduced compared with normal operation. This option to the present invention provides a greatly enhanced low flow sensitivity at reduced accuracy and is particularly desirable in certain clinical neonatal situations.

Referring again to Figure 9A, the time-of-flight determination has available the current flow direction from the signal strength routine. The cross correlation routines and subsequent peak finds determine the relative shift between the two signals over the corresponding base period of the signal frequency. If the initially assumed flow direction, as characterised by the selection of $S_1$ and $S_2$ data streams, was in the opposite direction, and the time-of-flight is corrected at this point by subtracting it from the base time period, then the channel 1 and channel 2 designations for all the cross correlation routines are switched.

The individual time-of-flight results of the continuous cross correlation routines are submitted to data filters. The time-of-flight values are first filtered and the results are then converted into equivalent flowrates. Two types of digital data filters may be employed. The first type is called a median filter which operates on the previous N data points where N is an odd number and is described as having a rank R where $N = 2R + 1$. This type of filter completely eliminates spurious, isolated data points which lie beyond the normal random spread of the current data.

The second type of filter is often referred to as a box car filter. This type of filter simply averages the previous N data points and hence imposes a 0-100% response time on the output signal equal to the time taken for the N data points to pass completely through the filter.

The low routine time-of-flight output is preferably filtered using only a rank 1 median filter. The MID routine is preferably filtered using a rank 2 median filter ahead of a 2 point box car filter. The HIGH routine is preferably filtered using a rank 7 median filter ahead of a 25 point box car filter.

A slower speed of response but simpler alternative to the above system is to utilise only a single cross-correlation routine which incorporates two or more frequency components of the signal in the same manner as the MID routine such that the correlation period is the same as the period of the lower frequency component. This routine has the advantage that it provides a seamless technique for measuring transit times that traverse the region of phase ambiguity associated with the higher frequency signal component.

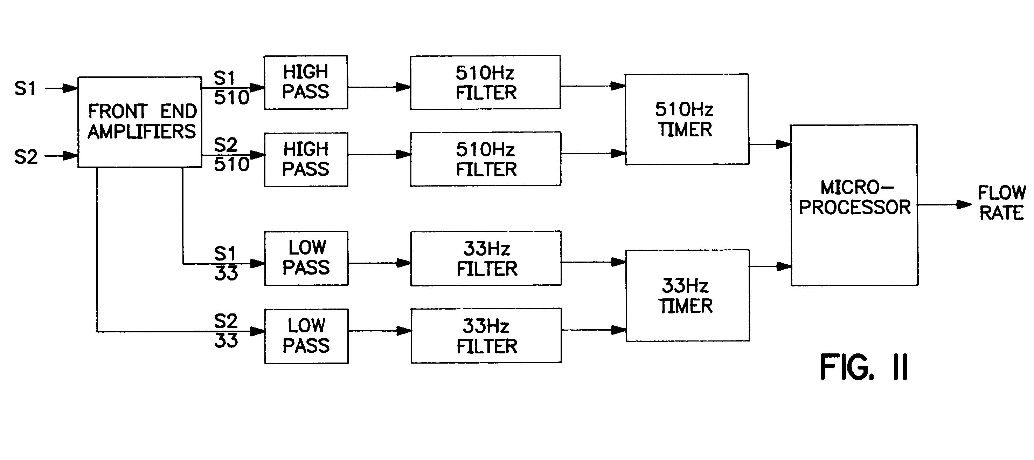

Another method for measuring the time-of-flight employs a zero crossing timer as shown specifically in Figure 11. Here the signal inputs are AC coupled and preferably sinusoidal. Simple comparator circuits are used to detect the point at which the first signal crosses the zero volt level and this event triggers a time counter device. The timer is then stopped and the number of counts read when a second zero crossing occurs, this time on channel 2.

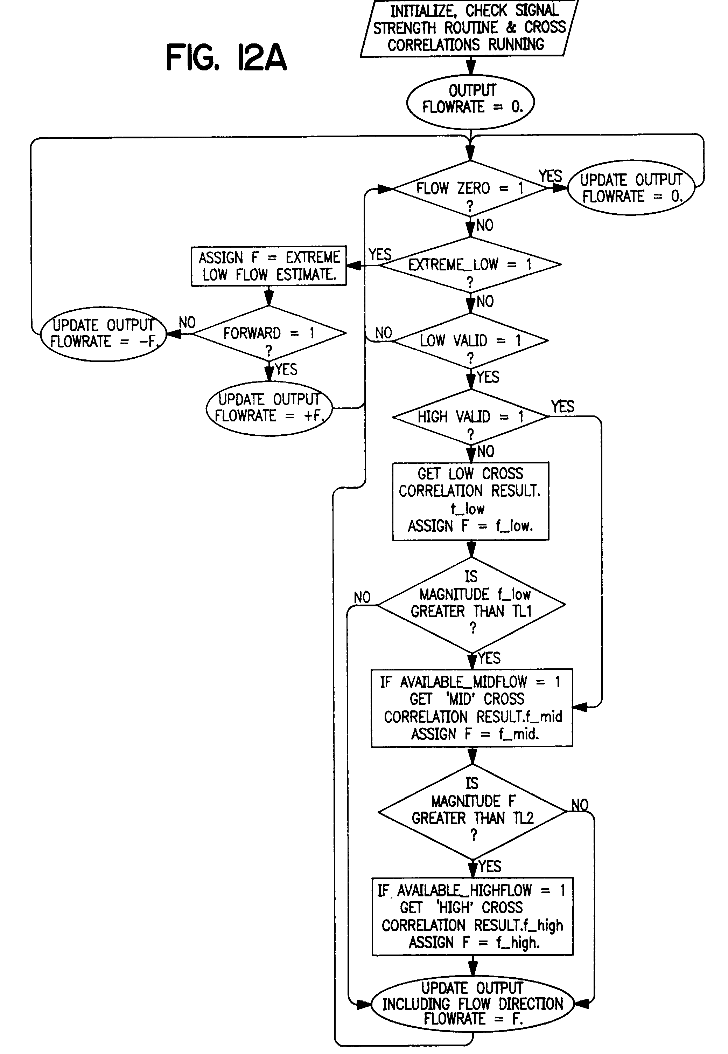

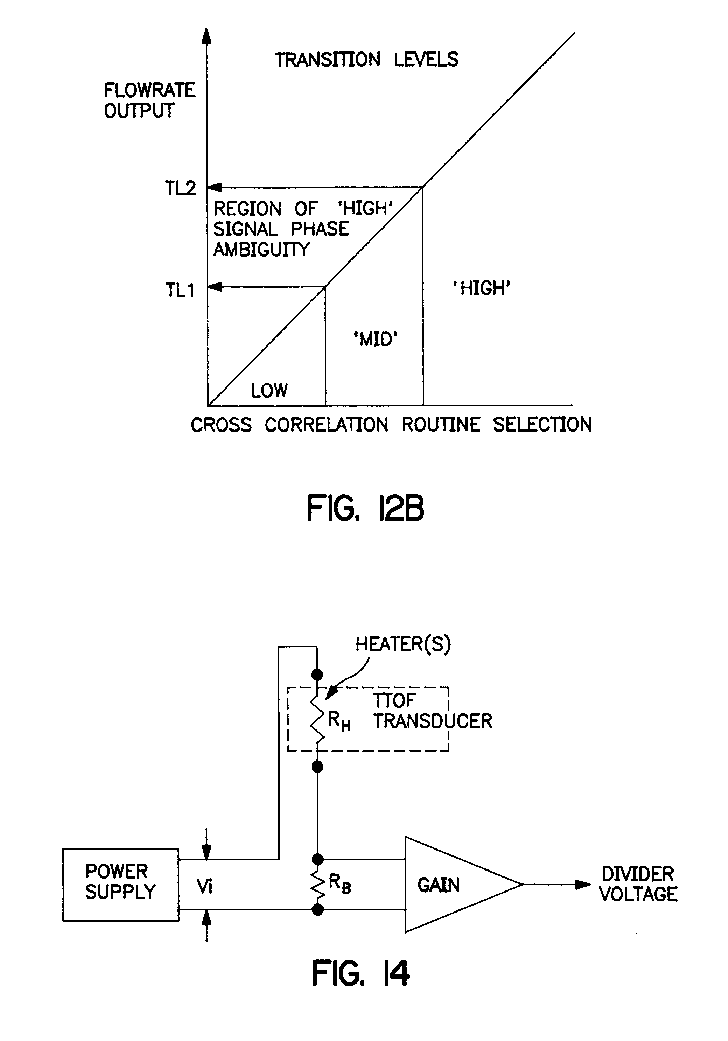

Referring again to Figure 9A, a main flow algorithm is employed to convert all of the data in the digital flow sequence into a flowrate and flow direction output. An example of the main flow algorithm is shown in Figure 12.

The algorithm initialises and checks that the signal strength and cross correlation routines are running. Then, depending on flag truth values from the signal strength routine indicating signal validity, the main algorithm proceeds to select the appropriate flowrate output value via a continuously and rapidly looping signal validity and result availability check and a transition level scheme.

The basic requirement is to obtain a selection of the appropriate correlation routine flow values as the flowrate varies. Hence, if the flowrate according to the low routine exceeds a certain lower level then it is more appropriate to use the result from the MID routine if it is available. However, if the MID routine value is greater than a certain threshold value flowrate, then it may be more appropriate to select the output of the high cross correlation routine if it is available. If the flowmeter is operational but there is no flow through the transducer, then a very fast loop will continually check this condition and report a flow of zero. If the flow is instead above zero, but nevertheless insufficient to render the low signals valid at both sensors, then another rapid loop will report the extreme low flowrate estimate and flow direction. This provides a fast response, extra low flow sensitivity which is particularly useful in rapid breathing neonates in a neonatal application.

When the low signals are valid, the result from the low cross correlation flow measurement is always available. This assures that there will be no time delay in the initial output as the flow accelerates from zero. Depending then on the outputs of the MID and high cross correlations vs. the selected threshold value flowrates, the flowrate value may or may not be subsequently reassigned in traversing the remainder of the algorithm to the update output stage at which point control loops back to the beginning.

The heaters and sensors employed in a flowmeter are physically close to one another. Because the heater is subjected to repeated and relatively rapid applications of power, a signal appears at the sensor at the same time as the power is applied. This signal, referred to as "crosstalk interference" must be distinguished from the thermal pulse signal in order to obtain accurate flow measurements. Crosstalk interference can lead to potential timing errors and also adversely affect the sensor signal amplifiers.

The crosstalk signal is generated due to the capacitative and inductive coupling which unavoidably occurs between unshielded conductors such as heaters and sensors.

The magnitude of the interference signal is determined by the geometry of the transducer, the rate of interfering voltage or current application at the heater and the sensitivity of the sensor as compared with the thermal signal sensitivity. The magnitude of the interfering signal is very sensitive to the steepness of the power pulse. The magnitude of this interfering signal can be alleviated somewhat by smoothing filters applied to the heater voltage waveform. In the present system, if the crosstalk interference signal were incorporated into both sensor signals, there would be distortion and possible timing errors.

In accordance with the present invention, this problem can be eliminated by alternating the polarity of successive power pulses. The fluid, which has no appreciation for the direction of current flow in the heater, receives the thermal pulse at the pulse rate frequency, whereas crosstalk interference is created at exactly half the pulse rate frequency. Thus, there is no crosstalk interfering spectral component at the pulse rate frequency. Accordingly, the sensor signals which are subsequently electronically filtered, are eventually completely devoid of crosstalk interference and no timing errors occur.

In fluid flow sensing applications the thermal time-of-flight peak heater temperatures tend to be relatively high. In some applications, particularly those involved in healthcare, federal regulations provide strict limits on the maximum operating temperature of healthcare apparatus. The present invention therefore provides a heater temperature control system which works in conjunction with the frequency encoding system previously described in connection with Figure 1.

During normal operation of the thermal time-of-flight transducer, as the flowrate varies, the rate at which heat is lost by the heater also varies. The rate of heat transfer from the heaters to the fluid flow depends not only on the velocity or rate of flow, but also on the composition of the fluid. If the heater pulse power is fixed at a preset level, then flowrate and composition variations will produce heater peak temperature variations. Since the difference between heat loss rates at the extremes of the range of flows through the transducer can be substantial, there are likewise substantial variations in peak heater temperatures. The heater temperature control system of the present invention automatically and actively controls the peak heater temperature to prevent heater material failure, ignition of any flammable gases and performance variations.

It should be also noted that in the healthcare industry, especially in a critical care setting to measure respiratory flows of patients under anaesthesia, federal regulations require that the surface temperature of components in the airway not exceed 300°C. Therefore, the heater temperature control system of the present invention may be designed to actively control the peak temperature of the heater so that it does not exceed 300°C. The present invention may be also provided with the means for controlling the peak temperature to a set point (e.g. between 100°C and 200°C) suitable for providing practical signal strengths and good performance. By employing the heater temperature control system of the present invention, preferred FM signal encoding is preserved and the heater power waveform may be amplitude modulated at half the FM frequency.

The heater control system varies the heater voltage such that during normal operation the strength and spectral integrity of the thermal pulse signals are preserved. The system generally comprises two linked temperature control subsystems which utilise peak heater temperature measurement information obtained via an electronic heater resistance measurement. The first subsystem is a limiter circuit which is set to continuously and automatically ensure that the peak temperature (e. g. 300°C) is never exceeded. It operates by removing the power applied to the heater during a thermal pulse whenever the heater resistance exceeds a preset value. The first subsystem therefore overrides the second subsystem in the event that the peak heater temperature is exceeded.

The second subsystem comprises a feedback control loop in which a set point temperature is pre-programmed which is less than the pre-set maximum temperature defined above for the first subsystem. This set point temperature represents desired normal operating heater peak temperature.

The peak heater temperature is measured, compared with the set point temperature and the heater voltage adjusted in accordance with a control algorithm once every FM cycle period. In addition, the heater voltage adjustment is further used to provide a lower frequency component to the signal via amplitude modulation as part of the signal encoding system.

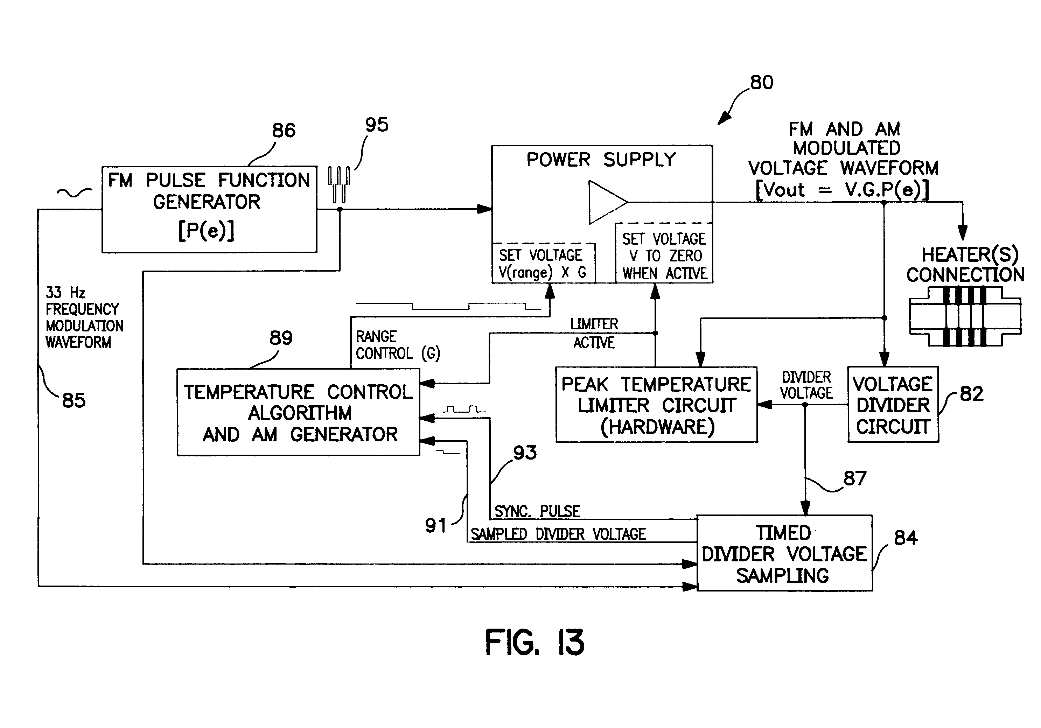

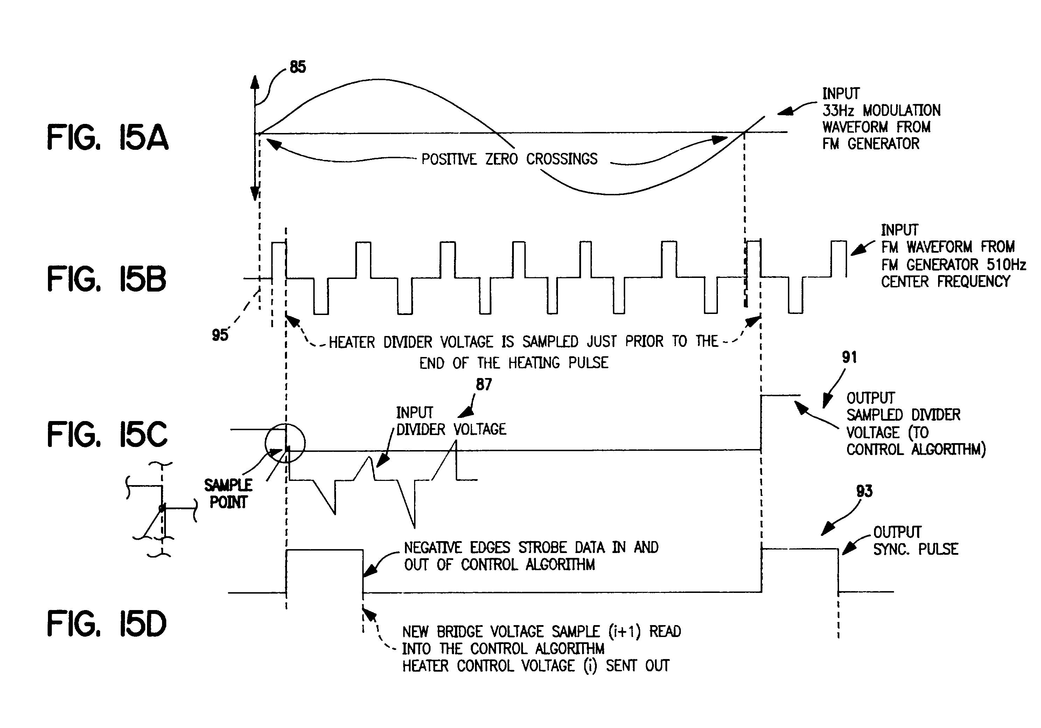

Referring to Figures 13 - 15, the heater control system 80 includes a voltage divider circuit 82 to measure the heater temperature by measuring the resistance of the heater (e.g. thin film conductor). The voltage divider circuit is more specifically set forth in Figure 14. Referring to Figure 14, the heater represented as a resistive element $R_H$ forms part of a potential divider with another fixed value resistor, $R_B$, with the power supply connected thereto. The potential across the fixed base resistor is then amplified. It is therefore possible by knowing the input voltage, $V_i$, the divider voltage, $V_B$, the gain, G, and the base resistance value to routinely determine the resistance of the heater. For example, the $R_H$ for a single heater which can be employed in the present invention may be in the region of about 400 ohms. The base resistor has a smaller value and is a stable, adequately power rated resistor of about 5 ohms while the gain is about 10.

Referring again to Figure 13, the divider voltage is connected to a sampling circuit 84. The sampling circuit samples the value of the divider voltage at specified times preferably corresponding to the heater peak temperature and the FM modulation frequency, cycle period.

The sampling circuit 84 has three inputs and generates two outputs. As described in connection with Figures 13 and 15, the circuit accepts the FM modulation waveform 85 from the FM function generator 86. The cycle period (e.g. 33 Hz) modulation frequency is detected by the positive (as shown specifically in Figure 15) or negative zero crossing. When this condition is flagged the next power pulse is detected via the power waveform input 95 and the leading edge starts a timer preset to time out at a time just less than the width of the pulse as shown in Figure 15. Clearly the temperature of the heater will tend to reach a maximum at a time corresponding to the trailing edge of the power pulse. It is preferred to sample the temperature just prior to that point.

At this time the output 87 of the voltage divider circuit 82 is sampled in the sampling circuit 84. The sampled voltage 91 is sent as an input to the heater temperature control algorithm 89. Simultaneously a synchronising pulse 93 is generated which has a width substantially less than the FM cycle period and is about, for example, 10 ms wide and is also sent to the A/D and D/A devices which mediate the flow of data in and out of the control algorithm 89. The trailing edge of the synchronising pulses is used to strobe the A/D and D/A devices. Thus the sampled voltage divider voltage is read once by the control algorithm as a new value each time the A/D device is so activated.

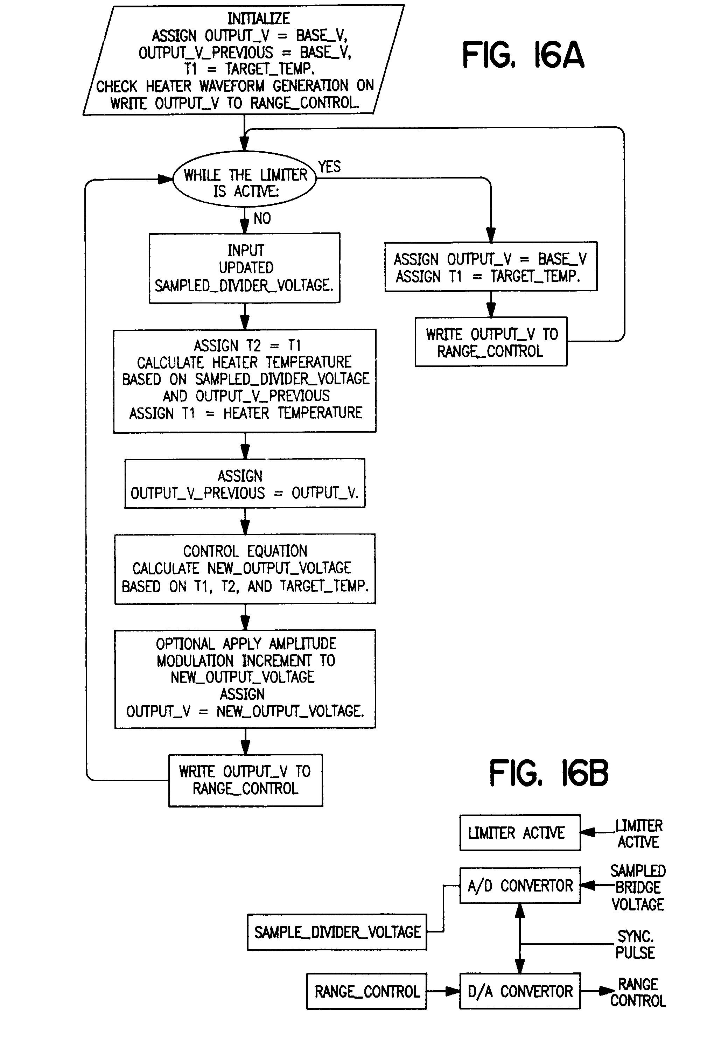

An example of a temperature control algorithm for use in the heater control system is shown in Figure 16. When the limiter circuit (see Figure 13) is active the output V variable is adjusted to a predetermined non-zero base value. This base value actually corresponds to a low pulse voltage setting, preferably in the range of from about 5 to 10 volts. At this level, the heater peak temperature is close to the set point peak temperature at zero flow.

The flow chart shows that there is always control and knowledge of the pulse voltage setting. Given therefore the sampled divider voltage and the predetermined values for the base resistance of the divider, the gain of the divider circuit, the ambient or cold temperature value of the heater resistance and the TCR value of the heater, the heater temperature is calculated and the necessary voltage adjustment to bring the peak heater temperature closer to the targeted temperature is determined. The new output voltage is written to the location RANGE CONTROL. When the output device (e.g. a digital to analogue converter) is strobed by the negative edge of the SYNC PULSE this value is converted to an appropriate analogue voltage via the digital to analogue converter which is connected to the SET VOLTAGE input of the power supply. This input voltage linearly controls the pulse voltage via a range factor which is built into the power supply such that the voltage output range of the digital to analogue converter ratios the output voltage range of the power supply.

The feedback temperature control system adjusts the heater power pulse voltage once every FM cycle period. This timing is necessary in order not to destroy the FM demodulation thermal pulse signal component. Therefore, the control algorithm adjusts the pulse voltage every FM cycle period. At this point, amplitude modulation is also generated. The AM modulation may be applied prior to writing the new output voltage variable to the RANGE CONTROL LOCATION. This can be accomplished by applying alternately positive and negative voltage increments to the voltage output value.

Other amplitude modulation waveforms and frequencies may be generated at this point. Amplitude modulation can be solely used to generate the lower frequency component(s) of the signal for fluids in general, especially when the fluid is a liquid. This can be accomplished in the simple step waveform manner previously described. If instead a more complicated multifrequency amplitude modulation is required, a continuous amplitude modulation function could be applied by an external amplitude waveform generator. The heater peak temperature control could then be achieved by instead applying incremental adjustment to the mean of that function.

Temperature control as discussed previously can be applied to a bipolar, bi-directional configuration employing two pairs of heaters and sensors so that four heaters are present in the transducer. The peak temperature of multiple heaters in a single transducer can be controlled when the heaters are essentially the same and are electrically connected together. The overall ambient resistance values for the combination are then determined and entered into the control program in the same way as previously described along with the TCR value. The heater resistances should then be similar in order that the individual peak temperatures are sufficiently close to each other.

The transducer employed in the present invention may optionally include multiple combinations of parallel pairs of heaters and sensors, preferably two pairs located directly opposite one another, preferably equally distant from the axis at the preferred off-axis position. This multiplanar flowmeter can provide increased accuracy by enhancing repeatability due to increased signal strength and decreased noise. Such a system is also more highly insensitive to potential flow profile asymmetry errors by reducing the demand for flow conditioning.

The flowmeter in this embodiment comprises a plurality of signal generating and sensing units, with each unit comprising at least one signal generator for passing the detectable signal into the fluid and at least one signal sensor for sensing the signal downstream of the point when the detectable signal is passed into the fluid. Each of the units is positioned in a plane along the mean flow direction of the fluid, said planes being parallel to each other so that the units are spaced apart and parallel to each other in the mean flow direction of the fluid.

The flowmeter may be provided with more than one combination of heaters and sensors. This biplanar arrangement provides improved accuracy by more clearly differentiating between the desired signal and undesired noise. The biplanar arrangement is also less sensitive to errors arising from flow profiles and therefore requires less flow conditioning to obtain accurate flow measurements.

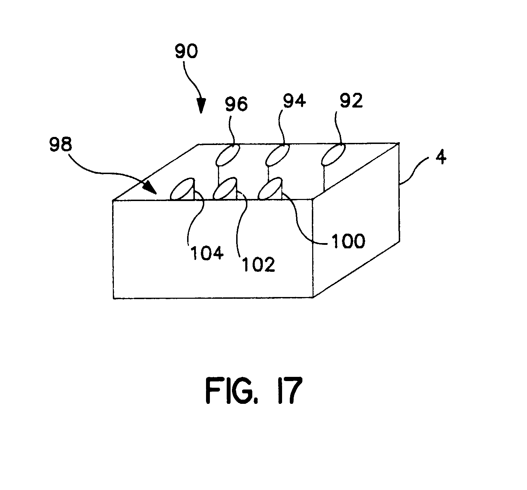

Referring to Figure 17, there is shown a first combination 90 of heaters and sensors including a heater 92 and respective sensors 94, 96. There is also provided a second combination 98 including a heater 100 and respective sensors 102 and 104. The respective combinations 90 and 98 of heaters and sensors are positioned directly across from each other (i.e. in the same longitudinal position within the flow path).

The adjacent sensor pairs 94, 96 and 102, 104 are preferably serially connected so that excitation currents are exactly the same and the heaters 92, are all operated from the common heater power supply, so that thermal pulse generation in the two planes is simultaneous. Assuming, for example, equal heater and sensor resistances, and hence sensitivity, the signal magnitude at the sensor pairs is now doubled. However, if the noise component of the signals is randomly generated, then the noise instead only increases by $\sqrt{2}$. Hence, the signal to noise ratio, which along with other factors determines the repeatability performance, should increase by about 41%, and

$$\frac{2}{\sqrt{2}}$$

and has been found to increase by as much as 100%, which provides enhanced repeatability performance. The high rate of improvement indicates that the intensities of some components of the velocity fluctuations which give rise to much of the 'noise' are themselves anticorrelated and cancel.

With the use of a multiplanar arrangement, the detectable signals can also be autocorrelated at adjacent sensor pairs and then the autocorrelations subsequently crosscorrelated. The time of flight determination then involves cross correlating the pair of autocorrelation functions. This results in an even greater enhancement in the signal to noise ratio and hence superior accuracy through enhanced repeatability at a given speed of response throughout the flow range.

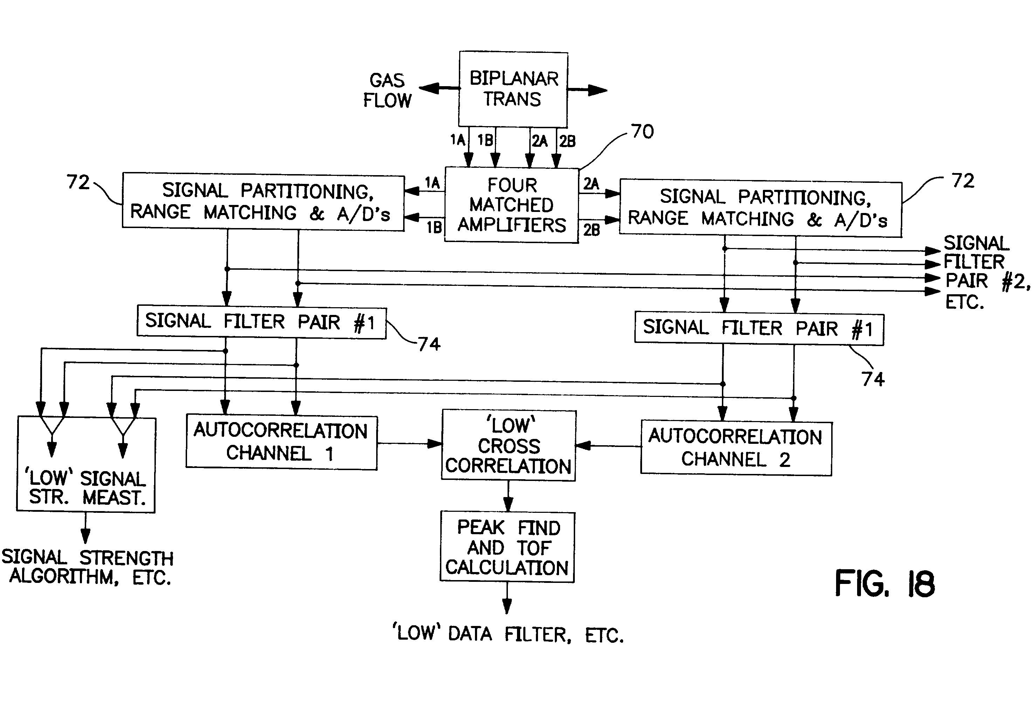

The preferred signal processing system for use with a multiplanar transducer is shown in Figure 18. In this arrangement, the signal processing system connects the sensors individually to four separate channels designated 1A, 1B, 2A and 2B. Signals from the four channels are sent to the front end amplifiers 70, the signal partitioning 72 and the signal filters 74 operate as described in connection with the signal processing system of Figure 7. The components 70, 72 and 74 are duplicated to provide capacity for extra channels.

The signal strength measurements can be modified to include the A and B signals as the first algorithmic step to obtain average channel 1 and channel 2 quantities whereupon the subsequent process remains essentially the same as that described above for Figure 8.

Autocorrelation as previously described is essentially the same as cross correlation with the difference that the two signals entering the correlation are considered different representations of the same signal.

The channel 1 and channel 2 autocorrelation functions are generated between each pair of plane A and B sensor signals for each channel and for each signal frequency range as defined by the signal filters 1, 2 and 3. The autocorrelation functions are then submitted to the cross correlation function routines to be processed in the same way as if they were channel 1 and channel 2 filter signals as in the system of Figure 8. It will be noted, however, that the actual numbers will be much larger and could therefore require factoring to avoid overflow in the signal processing.

## Claims

1. A device for measuring a flow characteristic of a fluid comprising:

   (a) at least one signal generating means 12 positioned in proximity to the flowpath of the fluid for generating a detectable signal and for delivering the detectable signal within said flowpath; and

   (b) at least one pair of longitudinally spaced apart sensors 14, 16 positioned downstream of the signal generating means 12 for sensing the detectable signal as a measure of the time of flight of the detectable signal between the pair of sensors.

2. A device for measuring a flow characteristic of a fluid comprising:

   (a) at least one signal generating means 12 positioned in proximity to the flowpath of the fluid for generating detectable signals and for delivering the detectable signals within said flowpath; and

   (b) at least one sensor positioned downstream of the signal generating means 12 for sensing the detectable signals as a measure of the time of flight of the detectable signals.

3. A device as claimed in claim 1 or 2, in which the signal generating means 12 generates detectable signals each in the form of a thermal pulse having a uniform shape about a peak temperature.

4. A device as claimed in claim 3, in which the signal generating means is a heating means 12 including a source of power 10 for generating a thermal pulse and means for controlling the generation of thermal pulses to prevent the heating means 12 from exceeding a preselected maximum temperature.

5. A device as claimed in claim 4, in which means is provided for terminating the thermal pulse when the heating means 12 reaches a preselected maximum temperature; and temperature control means operatively connected to the heating means 12 and comprising temperature detecting means for detecting the temperature of the heating means 12 and feed back control means for controlling the heating means based on the detected temperature so that the temperature of the heating means is maintained in a preselected range.

6. A device as claimed in any one of claims 1 to 4, in which at least one sensor is positioned off-axis with respect to the longitudinal axis of the flow of fluid for detecting flow velocity along a line traversing the direction of flow of the fluid.

7. A device as claimed in any of claims 1 to 6, in which two signal generating means 12 are provided, one on each side of the sensor(s) 14,16.

8. A device as claimed in any of claims 1 to 7, in which the detectable signal generated by the signal generating means 12 comprises simultaneously at least one high frequency component and at least one lower frequency component.

9. A device as claimed in any one of claims 4 to 8, in which the heating means 12 includes a source of power 10 for generating alternating power pulses to produce a detectable thermal signal.

10. A device for measuring the flow of a fluid comprising:

    (a) detectable signal generation means for generating a detectable signal and which inherently generates a crosstalk signal at half the frequency of the detectable signal;

    (b) means for detecting the detectable signal downstream of the detectable signal generation means;

    (c) signal process means for process the detectable signal and obtaining a flow characteristic of the fluid therefrom;

    (d) crosstalk interference signal detection means for detecting the crosstalk interference signal generated by the detectable signal generation means; and

    (e) means for eliminating any phase delay errors between the detectable signals due to errors created by the components of the signal process means.

11. A device as claimed in any one of claims 1 to 10, in which the or each signal generating means and/or the or each sensor comprises a thin film conductor 32 comprising a solid electrically non-conducting core 34 and a thin metallic film 36 covering at least a portion of the core 34, the conductor being operatively connected to a source of electrical energy.

12. A method of determining the time delay difference between two instances of the same signal unambiguously, said signal containing at least two known frequency components comprising:

a) cross correlating the signal over a correlation interval substantially equal to the period of the lowest component; and

b) locating the peak of the cross correlation function to thereby obtain the time delay.

FIG. I

FLOW TRANSDUCER

2

4

16  14  12

18

H SS H

28

26

GAS FLOW

22  20

MULTI-CONDUCTOR CABLE

10

HEATER POWER SUPPLY

8

SIGNAL PROCESSING SYSTEM

FREQUENCY ENCODING

SYSTEM

6

FLOWRATE AND FLOW DIRECTION OUTPUT

30

30

20

28

22

FIG. 2

26

30

FIG. 3

30

FIG. 4

32

34

FIG. 5

**FIG. 6**

```
                               41
FM PULSE FUNCTION    ‖‖       ┌─────────────────┐   FM AND AM  MODULATED
   GENERATOR      ───────────▶│ POWER  SUPPLY   │   VOLTAGE WAVEFORM
    [P(e_FM)]     40          │      ▷           │   [Vout = V.G.P(e)]
                              │                 │
                              │  SET  VOLTAGE   │
                         43   │     INPUT       │
                    ┌─────────│                 │──┐    HEATER(S)
                    │  ⌐_⌐¯   └─────────────────┘  │    CONNECTION
  TRIGGER PULSE   ┌─────────────────┐    42
  ONCE EVERY FM   │ AM   FUNCTION   │
  CYCLE PERIOD    │   GENERATOR     │
                  │ [G(t);f_AM = ½ f_FM] │
                  └─────────────────┘
                         44
```

$[P(e_{FM})]$

$[G(t); f_{AM} = \frac{1}{2} f_{FM}]$

$[Vout = V.G.P(e)]$

TRIGGER PULSE ONCE EVERY FM CYCLE PERIOD

HEATER(S) CONNECTION

**FIG. 7A**

33Hz FM MODULATION FREQUENCY COMPONENT

FM SPECTRUM

200 mV

20 mV /div

0

LINMAG

10 Hz        AVG:40        810 Hz
             510 Hz

**FIG. 7B**

LINEAR MAG.

400Hz    510Hz    650Hz

EP 0 773 432 A2

FIG. 8

GAS FLOW — TRANS → PAIR OF MATCHED AMPLIFIERS (50) → 

PAIR LOW PASS FILTERS 400Hz CUTOFF: PAIR ATTEN. (52) → (54) → PAIR NLAs (56) — 'LOW' FREQUENCY BRANCH

PAIR HIGH PASS FILTERS 200Hz CUTOFF: (54) → PAIR NLAs — 'HIGH' FREQUENCY BRANCH

PAIR SUMMING AMPS. (60) → PAIR A/D CONVERTERS (58) → DSP EXECUTING FLOW ALGORITHM (62) → FLOWRATE AND FLOW DIRECTION SIGNAL(S)

EP 0 773 432 A2

FIG. 9A

◇ TIME SHIFT = 2.8ms (CORRECT TIME OF FLIGHT)

## FIG. 9B

INITIALIZE THE ROUTINE
FLOW ZERO = 1,
OTHER FLAGS = 0.

THE FLOW IS ZERO
FLOW ZERO = 1,
LOW VALID = 0.

YES ← LOW S1
AND LOW S2 = 0
?

NO

LOW S1
AND LOW S2 = 1
?

NO → EXTREME_LOW = 1,
LOW VALID = 0.

YES

THE LOW SIGNALS
ARE VALID
LOW VALID = 1.

LOW S1 = 1
?

NO → FORWARD = 0.

YES

FORWARD = 1.

IS
LOW S1 GREATER
THAN LOW S2
?

NO

YES

FORWARD = 1.

THE HIGH SIGNALS
ARE NOT VALID
HIGH VALID = 0.

NO ← HIGH S1
AND HIGH S2 = 1
?

YES

THE HIGH SIGNALS
ARE VALID
HIGH VALID = 1.

IS
HIGH S1 GREATER
THAN HIGH S2
?

NO → FORWARD = 0.

YES

FORWARD = 1.

FIG. 10

22

FIG. II

EP 0 773 432 A2

## FIG. I2A

INITIALIZE, CHECK SIGNAL STRENGTH ROUTINE & CROSS CORRELATIONS RUNNING

OUTPUT FLOWRATE = 0.

FLOW ZERO = 1 ? —YES→ UPDATE OUTPUT FLOWRATE = 0.

NO

EXTREME_LOW = 1 ? —YES→ ASSIGN F = EXTREME LOW FLOW ESTIMATE.

NO

FORWARD = 1 ? —NO→ UPDATE OUTPUT FLOWRATE = -F.

YES

UPDATE OUTPUT FLOWRATE = +F.

LOW VALID = 1 ? (NO)

YES

HIGH VALID = 1 ? —YES→

NO

GET LOW CROSS CORRELATION RESULT. f_low ASSIGN F = f_low.

IS MAGNITUDE f_low GREATER THAN TL1 ? —NO→

YES

IF AVAILABLE_MIDFLOW = 1 GET 'MID' CROSS CORRELATION RESULT.f_mid ASSIGN F = f_mid.

IS MAGNITUDE F GREATER THAN TL2 ? —NO→

YES

IF AVAILABLE_HIGHFLOW = 1 GET 'HIGH' CROSS CORRELATION RESULT.f_high ASSIGN F = f_high.

UPDATE OUTPUT INCLUDING FLOW DIRECTION FLOWRATE = F.

FIG. 12B

FIG. 14

FIG. 13

EP 0 773 432 A2

# EP 0 773 432 A2

FIG. 15A

INPUT
33Hz MODULATION
WAVEFORM FROM
FM GENERATOR

POSITIVE ZERO CROSSINGS

85

FIG. 15B

INPUT
FM WAVEFORM FROM
FM GENERATOR 510Hz
CENTER FREQUENCY

HEATER DIVIDER VOLTAGE IS SAMPLED JUST PRIOR TO THE
END OF THE HEATING PULSE

95

FIG. 15C

OUTPUT
SAMPLED DIVIDER
VOLTAGE (TO
CONTROL ALGORITHM)

91

INPUT
DIVIDER VOLTAGE

87

SAMPLE POINT

FIG. 15D

OUTPUT
SYNC. PULSE

93

NEGATIVE EDGES STROBE DATA IN AND
OUT OF CONTROL ALGORITHM

NEW BRIDGE VOLTAGE SAMPLE (i+1) READ
INTO THE CONTROL ALGORITHM
HEATER CONTROL VOLTAGE (i) SENT OUT

27

FIG. 16A

FIG. 16B

FIG. 17

FIG. 18